# EUROPEAN PATENT APPLICATION

(11) **EP 4 567 979 A1**
(43) Date of publication of application: **11.06.2025**
(21) Application number: 23214960.9
(22) Date of filing: 07.12.2023
(51) Int. Cl.: H01M 50/204, B60L 50/64, H01M 50/244, H01M 50/249, H01M 50/289, H01M 50/296, H01M 50/298, H01M 50/543, H01M 50/574, H01R 11/00, H01R 12/00

(54) **A BATTERY PACK ARRANGEMENT COMPRISING A BATTERY DISCONNECTION UNIT**

(71) Applicant: VOLVO TRUCK CORPORATION, 405 08 Göteborg (SE)
(72) Inventor: JONSSON, Kasper, 417 57 GÖTEBORG (SE); PAWAR, Tejas, 418 70 GÖTEBORG (SE); IRANNEZHAD, Mike, 411 20 GÖTEBORG (SE)
(74) Representative: Kransell & Wennborg KB

(57) **Abstract**

A battery pack arrangement (31) comprising: a housing (40) having an opening (42); a battery pack (50) including a plurality of battery cells (52) electrically connected to battery pack terminal (54) of the battery pack (50), the battery pack (50) being arranged in the housing (40); a battery disconnection unit (60) configured to disconnect the battery pack (50) from a high voltage connection (100) for a load and/or a power source (10); a tray (70) supporting the battery disconnection unit (60), wherein the tray (70) is retractably arranged in the housing (40) such that the tray (70) supporting the battery disconnection unit (60) can be moved through the opening (42) of the housing (40) for accessing the battery disconnection unit (60).

## Description

### TECHNICAL FIELD

The disclosure relates generally to a battery pack arrangement. In particular aspects, the disclosure relates to a battery pack arrangement comprising a battery disconnection unit. The disclosure can be applied to heavy-duty vehicles, such as trucks, buses, and construction equipment, among other vehicle types including marine vessels. Although the disclosure may be described with respect to a particular vehicle, the disclosure is not restricted to any particular vehicle.

### BACKGROUND

A vehicle typically comprises an engine for propelling the vehicle. The engine may be powered by various means, such as e.g. by liquid or gaseous fuel in a combustion engine or an internal combustion engine. Alternatively, the vehicle may be propelled by electric power in an electric machine. Moreover, hybrid solutions exist in which the vehicle is propelled both by an internal combustion engine and an electric machine. In either way, an energy storage device is used to store the energy needed in order to propel the vehicle. Energy storage devices may further be used to power auxiliary loads in the vehicle.

For many vehicles, the energy storage devices are comprised in an energy storage system, wherein the energy storage system is configured to power the electric machine for propelling the vehicle, as well as any auxiliary load. For example, for an electric vehicle, the energy storage devices may be batteries or battery packs, which are configured to operate the electric machine as well as electrically driven auxiliary equipment. The electric machine and/or the electrically driven auxiliary equipment may be commonly referred to as a load. Several batteries, or several series-connected and/or parallel connected battery cells, may be grouped into the battery pack. The battery pack is periodically in need of charging, and is then electrically connected to an electrical energy source, e.g. via plug directly connected to the power grid, or by an on-board charger. Such chargers may commonly be referred to as a power source.

In many applications, the battery pack is governed by a battery disconnection unit which is used for connecting and disconnecting the battery pack from the load. However, accessing the battery disconnecting unit is often cumbersome, and there is thus a need in the industry for an improved arrangement.

### SUMMARY

According to a first aspect of the disclosure, there is provided a battery pack arrangement comprising: a housing having an opening; a battery pack including a plurality of battery cells electrically connected to a battery pack terminal of the battery pack, the battery pack being arranged in the housing; a battery disconnection unit configured to disconnect the battery pack from a high voltage connection for a load and/or a power source; a tray supporting the battery disconnection unit; wherein the tray is retractably arranged in the housing such that the tray supporting the battery disconnection unit can be moved through the opening of the housing for accessing the battery disconnection unit. The first aspect of the disclosure may seek to overcome problems with accessing the battery disconnection unit. That is, as the tray supporting the battery disconnection unit is movable relative to the housing, and is configurable to be moved through the opening of the housing in a retractable manner, the battery disconnection unit may be accessed in an improved manner. A technical benefit may include an improved structure of the battery pack arrangement in general, and in the supporting structure of the battery disconnection unit in particular. Stated differently, the tray is configurable in a first position within the housing and in a second position outside of the housing, wherein the tray is configured to be retractably moved through the opening between the first and second positions. For example, the tray may be attached to the housing, or a structure within the housing (e.g. a rack), both in the first position and the second position. However, according to some examples, the tray may be detachably arranged to the housing, or the structure within the housing (e.g. the rack), and may be removed and detached from the housing or the structure within the housing (e.g. the rack) in the second position. In the first position of the tray, the battery disconnection unit is arranged inside the housing, and in the second position of the tray, the battery disconnection unit is arranged outside of the housing. The tray may e.g. be slidably movable relative the housing, and may be configurable to be slided through the opening.

Optionally in some examples, including in at least one preferred example, the battery disconnection unit comprises a battery pack busbar arrangement electrically connected to the battery pack terminal, wherein the battery pack arrangement further comprises a high voltage busbar arrangement electrically connected to the high voltage connection, and a first fastener structure configured to releasably connect the high voltage busbar arrangement electrically and mechanically to the battery pack busbar arrangement. A technical benefit may include an efficient structure for releasably connecting the battery disconnection unit to the high voltage connection. The battery pack busbar arrangement is thus to be understood as a busbar of the battery disconnection unit electrically connectable to the battery pack via the battery pack terminal. The high voltage connection is to be understood as being arranged inside the housing externally of the tray. Moreover, the high voltage busbar arrangement is typically attached to the high voltage connection, such as e.g. fixedly attached to the high voltage connection. However, the high voltage busbar arrangement may extend from the high voltage connection to a position within the housing above the tray, when the tray is arranged inside the housing (e.g. the previously mentioned first position of the tray). Hereby, the high voltage busbar arrangement may be arranged in close proximity to the battery pack busbar arrangement for electrical connection to the same. The first fastener structure may be configurable in a first state which enables the high voltage busbar arrangement to be electrically and mechanically connected to the battery pack busbar arrangement, and be configurable in a second state which enables the high voltage busbar arrangement to be electrically and mechanically disconnected from the battery pack busbar arrangement. Thus, in the second state, the high voltage busbar arrangement is physically disconnected from the battery pack busbar arrangement. By re-configuring the first fastener structure from the first state to the second state, the high voltage busbar arrangement is released from the battery pack busbar arrangement. According to some examples, the battery disconnection unit is releasably attached to the high voltage connection by means of the first fastener structure. For example, by re-configuring the first fastener structure from the first state to the second state, the battery disconnection unit is released from high voltage connection and may thus be retractably moved relative to the housing via the opening.

Optionally in some examples, including in at least one preferred example, each one of the high voltage busbar arrangement and the battery pack busbar arrangement comprises a first interacting structure configured to releasably engage with the first fastener structure. A technical benefit may include an advantageous structure for interacting with the first fastener structure. Typically, the first interacting structures of the high voltage busbar arrangement and the battery pack busbar arrangement which are arranged to interact with a common first fastener structure are aligned. For example, the first interacting structures of the high voltage busbar arrangement and the battery pack busbar arrangement are aligned with regards to a common centre axis, wherein the first fastener structure is arranged to releasably engage with the first interacting structures of the high voltage busbar arrangement and the battery pack busbar arrangement along the common centre axis. The first fastener structure may e.g. be a fastener such as a threaded screw, a bolt and nut, a clamp, a hooking structure or a snap fit lock. Correspondingly, the first interacting structure may be a threaded through hole for interacting with the threaded screw, a through-hole for interacting with the bolt, a clamping surface for interacting with the clamp, a hooking aperture for interacting with the hooking structure, a snap fit receiving surface for interacting with the snap fit lock.

Optionally in some examples, including in at least one preferred example, the first fastener structure and the first interacting structures are configured to threadingly interact with each other. A technical benefit may include a reliable interaction between the first fastener structure and the first interacting structures of the high voltage busbar arrangement and the battery pack busbar arrangement. Hereby, the high voltage busbar arrangement and the battery pack busbar arrangement may be securely and releasably fastened to each other. As previously mentioned, the first fastener structure may be a threaded screw and the first interacting structures correspondingly threaded through holes.

Optionally in some examples, including in at least one preferred example, the battery disconnection unit comprises an inner portion facing the high voltage connection of the load and/or power source, and an outer portion arranged opposite to the inner portion with regards to a centre axis of the battery disconnection unit, wherein the first interaction structure for the battery pack busbar arrangement is arranged in the outer portion of the battery disconnection unit. A technical benefit may include improved access of the first interaction structures for the battery pack busbar arrangement. Hereby, the first fastener structure may be accessed in the outer portion of the battery disconnection unit, e.g. through the opening in the housing, and thus, the battery pack busbar arrangement may be released from the high voltage busbar arrangement by releasing the first fastener structure. Typically, the high voltage busbar arrangement extends towards and up to the outer portion of the battery disconnection unit, such that the first interaction structures of the high voltage busbar arrangement and the battery pack busbar arrangement aligns for releasably attachment by means of the first fastener structure. The outer portion may e.g. extend from an outer end of the battery disconnection unit towards the centre axis and make up at most 50 % of the battery disconnection unit. The outer end is thus facing away from the high voltage connection, typically towards the opening of the housing when the tray is arranged in its first position (i.e. within the housing).

Optionally in some examples, including in at least one preferred example, the high voltage busbar arrangement is elongated, wherein the first interaction structure of the high voltage busbar arrangement is arranged in an end portion of the elongated high voltage busbar arrangement. A technical benefit may include simplified connection with the battery pack busbar arrangement. The end portion of the elongated high voltage busbar arrangement is typically arranged adjacent the first interacting structure of the battery pack busbar arrangement when the tray is arranged in its first position (i.e. within the housing).

Optionally in some examples, including in at least one preferred example, the battery pack busbar arrangement is elongated, wherein the first interaction structure of the battery pack busbar arrangement is arranged in an end portion of the elongated battery pack busbar arrangement. A technical benefit may include simplified connection with the high voltage busbar arrangement. By having elongated high voltage and battery pack busbar arrangements, the corresponding first interacting structures may be advantageously arranged within the housing for improved access to the first interacting structures and first fastener structure used to releasably attach the first interacting structures of the high voltage and battery pack busbar arrangements.

Optionally in some examples, including in at least one preferred example, the battery pack arrangement further comprises a second fastener structure configured to releasably connect the battery pack busbar arrangement electrically and mechanically to the battery pack terminal. A technical benefit may include an efficient structure for releasably connecting the battery disconnection unit to the battery pack terminal. The battery pack terminal is to be understood as being arranged inside the housing externally of the tray. Moreover, the battery pack terminal is typically attached to the battery pack, such as e.g. forming a part of the battery pack. However, the battery pack terminal may extend from the battery pack to a position within the housing below, or in level with, the tray, when the tray is arranged inside the housing (e.g. the previously mentioned first position of the tray). Hereby, the battery pack terminal may be arranged in close proximity to the battery pack busbar arrangement for electrical connection to the same. The second fastener structure may be configurable in a first state which enables the battery pack terminal to be electrically and mechanically connected to the battery pack busbar arrangement, and be configurable in a second state which enables the battery pack terminal to be electrically and mechanically disconnected from the battery pack busbar arrangement. Thus, in the second state, the battery pack terminal is physically disconnected from the battery pack busbar arrangement. By re-configuring the first fastener structure from the first state to the second state, the battery pack terminal is released from the battery pack busbar arrangement. According to some examples, the battery disconnection unit is releasably attached to the battery pack by means of the second fastener structure. For example, by re-configuring the second fastener structure from the first state to the second state, the battery disconnection unit is released from battery pack and may thus be retractably moved relative to the housing via the opening. According to some examples, the battery disconnection unit is releasably attached to the battery pack and the high voltage connection by means of the first and second fastener structure. For example, by re-configuring the first and second fastener structure from the first state to the second state, the battery disconnection unit is released from battery pack and the high voltage connection and may thus be retractably moved relative to the housing via the opening.

Optionally in some examples, including in at least one preferred example, each one of the battery pack terminal and the battery pack busbar arrangement comprises a second interacting structure configured to releasably engage with the second fastener structure. A technical benefit may include an advantageous structure for interacting with the second fastener structure. Typically, the second interacting structures of the battery pack terminal and the battery pack busbar arrangement which are arranged to interact with a common second fastener structure are aligned. For example, the second interacting structures of the battery pack terminal and the battery pack busbar arrangement are aligned with regards to a common centre axis, wherein the second fastener structure is arranged to releasably engage with the second interacting structures of the battery pack terminal and the battery pack busbar arrangement along the common centre axis. The second fastener structure may e.g. be a fastener such as a threaded screw, a bolt and nut, a clamp, a hooking structure or a snap fit lock. Correspondingly, the second interacting structure may be a threaded through hole for interacting with the threaded screw, a through-hole for interacting with the bolt, a clamping surface for interacting with the clamp, a hooking aperture for interacting with the hooking structure, a snap fit receiving surface for interacting with the snap fit lock.

Optionally in some examples, including in at least one preferred example, the second fastener structure and the second interacting structures are configured to threadingly interact with each other. A technical benefit may include a reliable interaction between the second fastener structure and the second interacting structures of the battery pack terminal and the battery pack busbar arrangement. Hereby, the battery pack terminal and the battery pack busbar arrangement may be securely and releasably fastened to each other. As previously mentioned, the second fastener structure may be a threaded screw and the second interacting structures correspondingly threaded through holes.

Optionally in some examples, including in at least one preferred example, the second interaction structure for the battery pack busbar arrangement is arranged in the outer portion of the battery disconnection unit. A technical benefit may include improved access of the second interaction structures for the battery pack busbar arrangement. Hereby, the second fastener structure may be accessed in the outer portion of the battery disconnection unit, e.g. through the opening in the housing, and thus, the battery pack busbar arrangement may be released from the battery pack terminal by releasing the second fastener structure. Typically, the battery pack terminal faces the battery disconnection unit, such that the second interaction structures of the battery pack terminal and the battery pack busbar arrangement aligns for releasably attachment by means of the second fastener structure.

Optionally in some examples, including in at least one preferred example, the previously mentioned end portion of the battery pack busbar arrangement is a first end portion, and wherein the elongated battery pack busbar arrangement comprises a second end portion arranged in an opposite end portion relative to the first end portion, and wherein the second interaction structure of the battery pack busbar arrangement is arranged in the second end portion of the elongated battery pack busbar arrangement. A technical benefit may include simplified connection with the battery pack terminal.

Optionally in some examples, including in at least one preferred example, the battery pack busbar arrangement comprises a positive battery pack busbar releasably connected electrically and mechanically to a positive terminal of the battery pack terminal, and a negative battery pack busbar releasably connected electrically and mechanically to a negative terminal of the battery pack terminal. A technical benefit may include an improved structure of the battery pack busbar arrangement for both the positive and negative side of the battery pack arrangement. The positive and negative battery pack busbars may be arranged to transfer high voltage from the battery pack to the high voltage connection via the battery disconnection unit, e.g. voltages over 100 V. That is, the battery disconnection unit is typically arranged between the main positive and main negative terminals of the battery pack terminal and the high voltage connection. All features related to the battery pack busbar arrangement previously mentioned are thus applicable for each one of the positive and negative battery pack busbars. Thus, the positive battery pack busbar is releasably connected electrically and mechanically to the positive terminal of the battery pack terminal by means of the second fastener structure and the second interacting structures. Correspondingly, the negative battery pack busbar is releasably connected electrically and mechanically to the negative terminal of the battery pack terminal by means of the second fastener structure and the second interacting structures.

Optionally in some examples, including in at least one preferred example, the high voltage busbar arrangement comprises a positive high voltage busbar connected electrically and mechanically to a positive terminal of the high voltage connection, and a negative high voltage busbar connected electrically and mechanically to a negative terminal of the high voltage connection. A technical benefit may include an improved structure of the high voltage busbar arrangement for both the positive and negative side of the battery pack arrangement. The positive and negative high voltage busbars may be arranged to transfer high voltage from the battery pack and the battery disconnection unit to the high voltage connection. That is, the battery disconnection unit is typically arranged between the main positive and main negative terminals of the high voltage connection and the battery pack. All features related to the high voltage busbar arrangement previously mentioned are thus applicable for each one of the positive and negative high voltage busbars. Thus, the positive high voltage busbar is releasably connected electrically and mechanically to the positive battery pack busbar by means of the first fastener structure and the first interacting structures. Correspondingly, the negative high voltage busbar is releasably connected electrically and mechanically to the negative battery pack busbar by means of the first fastener structure and the first interacting structures.

Optionally in some examples, including in at least one preferred example, the battery pack arrangement further comprises at least one contactor configured to electrically connect and disconnect the battery pack to the high voltage connection, wherein the contactor is arranged in the battery pack busbar arrangement. A technical benefit may include an efficient structure for electrically connecting and disconnecting the battery pack from the high voltage connection, without mechanically disconnecting the battery disconnection unit from the battery pack and/or the high voltage connection. For example, the at least one contactor may include a first contactor, or a positive contactor, arranged in the positive battery pack busbar for electrically connecting and disconnecting the positive terminal of the battery pack terminal and the positive terminal of the high voltage connection. For example, the at least one contactor may include a second contactor, or a negative contactor, arranged in the negative battery pack busbar for electrically connecting and disconnecting the negative terminal of the battery pack terminal and the negative terminal of the high voltage connection.

Optionally in some examples, including in at least one preferred example, the tray is arranged above the battery pack. A technical benefit may include an advantageous position of the tray and the battery disconnection unit relative to the battery pack. Stated differently, the tray is arranged at a higher vertical position as compared to the battery pack. The tray may e.g. be arranged in between the battery pack and the high voltage connection.

Optionally in some examples, including in at least one preferred example, the battery pack arrangement further comprises a rack arranged in the housing adj acent the opening, the rack comprising a first engagement surface, wherein the tray comprises a second engagement surface configured to move along the first engagement surface when the tray is moved through the opening of the housing. A technical benefit may include an advantageous structure for enabling the retractable movement of the tray relative to the housing. For example, the first engagement surface may be arranged to always be in contact with the second engagement surface. The first engagement surface may be comprised in an elongated slot or track of the rack, and the second engagement surface may be comprised in a wheel of the tray. Alternatively, the second engagement surface is a flat surface of the tray, typically arranged in the lateral side portions of the tray, wherein the first and second engagement surfaces are arranged to slide relative each other as the tray is retractably moved from inside the housing to outside housing via the opening (i.e. moved between the previously mentioned first and second positions of the tray).

Optionally in some examples, including in at least one preferred example, the battery disconnection unit comprises a PCB including battery management functionality. A technical benefit may include improved functionality of the battery disconnection unit. It should be understood that the battery disconnection unit may comprise further components in addition to the at least one contactor and/or the PCB, such as e.g. one or more fuses. Such fuse(s) may e.g. be arranged in the battery pack busbar arrangement.

According to a second aspect of the disclosure, a vehicle comprising the battery pack arrangement of the first aspect of the disclosure is provided. The second aspect of the disclosure may seek to solve the same problem as described for the first aspect of the disclosure. Thus, effects and features of the second aspect of the disclosure are largely analogous to those described above in connection with the first aspect of the disclosure.

Optionally in some examples, including in at least one preferred example, the vehicle further comprises an electric machine for propelling the vehicle, the electric machine being powered by the battery pack arrangement.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

**FIG. 1** is an exemplary, partly schematic, side view of an electric vehicle comprising an electric machine for propelling the vehicle and a battery pack arrangement for powering the electric machine according to one example.
**FIG. 2** is an exemplary, partly schematic, perspective view of a battery pack arrangement according to one example.
**FIG. 3** is an exemplary, partly schematic, perspective view of a battery pack arrangement according to one example.
**FIG. 4** is an exemplary, partly schematic, top view of a battery disconnection unit supported by a tray in a battery pack arrangement according to one example.

### DETAILED DESCRIPTION

The detailed description set forth below provides information and examples of the disclosed technology with sufficient detail to enable those skilled in the art to practice the disclosure.

The disclosed technology may solve the problem relating to accessing the battery disconnection unit of a battery pack arrangement. The disclosed technology provides an improved electrical interface, at least that corresponding to the battery disconnection unit. As the tray supporting the battery disconnection unit is movable relative to the housing of the battery pack, and as the tray is configurable to be moved through the opening of the housing in a retractable manner, the battery disconnection unit may be accessed in an improved manner. A technical benefit may include an improved structure of the battery pack arrangement in general, and in the supporting structure of the battery disconnection unit in particular. By providing a retractable tray, the tray may be arranged in a first position within the housing and in a second position outside of the housing, such that the battery disconnection unit can be accessed in an improved manner outside of the housing.

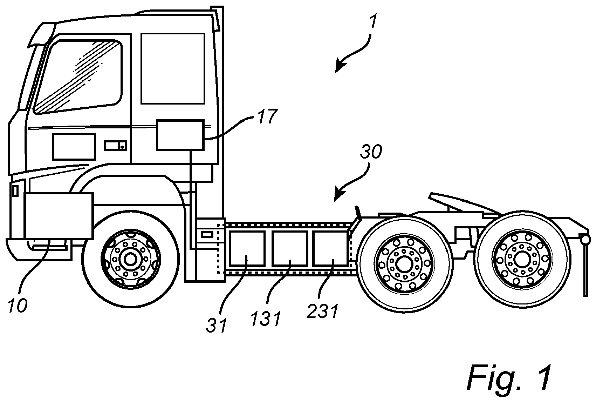

**FIG. 1** shows a vehicle 1 in the form of an exemplary heavy-duty truck. The vehicle 1 is an electric vehicle, such as a full electric vehicle or a hybrid, comprising at least one electric machine 10 (as an electric traction machine) powered by a battery pack system 30, wherein in the example of Fig. 1, the battery pack system 30 comprises at least one battery pack arrangement 31. However, as shown in Fig. 1, the battery pack system 30 may comprise further battery pack arrangements 131, 231. The at least one battery pack arrangement 31 is configured to power at least one load, such as the electric machine 10. Moreover, the vehicle 1 comprises a control unit 17 arranged and configured for controlling at least parts of the operation of the battery pack system 30, such as the operation of a battery disconnection unit of the at least one battery pack arrangement 31. The vehicle 1 typically further comprises other parts of the powertrain such as transmission, drive shafts and wheels (not shown in detail). The electric machine 10 may be operated as an electric motor consuming electricity provided by the at least one battery pack arrangement 31, e.g. to provide propulsion power, and may be operated as a generator to generate electricity to charge the at least one battery pack arrangement 31.

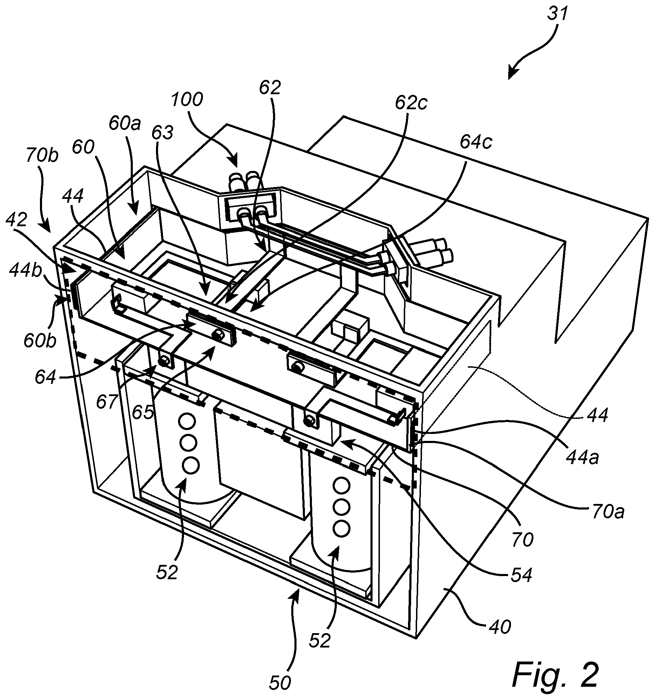

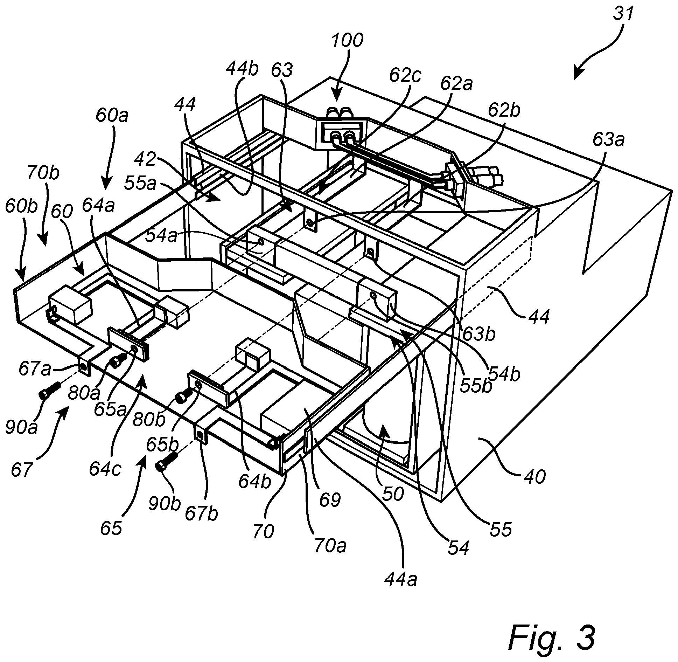

In **FIG. 2** and **FIG. 3**, the battery pack arrangement 31 is shown in greater detail. However, each one of the further battery pack arrangements 131, 231 shown in Fig. 1 may be correspondingly arranged. The battery pack arrangement 31 comprises a housing 40 having an opening 42. The opening 42 is typically arranged in a top portion of the housing 40, as shown by the dashed-lined rectangular box in Fig. 2. The battery pack arrangement 31 further comprises a battery pack 50 arranged in the housing 40. The battery pack 50 comprises a plurality of battery cells 52 electrically connected to battery pack terminal 54 (shown schematically in Fig. 2). The plurality of battery cells 52 may be connected in series and/or in parallel. For example, a predetermined number of the battery cells in the battery pack 50 may be connected in parallel to form a "logical cell" and then several "logical cells" may be connected in series inside the battery pack 50. Note that a top wall and a side wall of the housing 40 have been made transparent in Figs. 2 and 3 for increased visibility of the components inside the housing 40.

Moreover, the battery pack arrangement 31 comprises a battery disconnection unit 60 configured to disconnect the battery pack 50 from a high voltage connection 100 for a load and/or a power source. For example, the high voltage connection 100 may be electrically connected to electric machine 10 of Fig. 1. The high voltage connection 100 may be at least partly arranged externally of the battery pack arrangement 31 and/or may be at least partly arranged inside of the housing 40.

The battery pack arrangement 31 further comprises a tray 70 supporting the battery disconnection unit 60. The tray 70 is in Figs. 2 and 3 arranged above the battery pack 50 in the vertical direction. Typically, the battery disconnection unit 60 is fixedly attached to the tray 70, and is thus movable together with the tray 70. The tray 70 is retractably arranged in the housing 40 such that the tray 70 is configurable to be moved through the opening 42 of the housing 40 for accessing the battery disconnection unit 60. That is, the tray 70 is configurable in a first position within the housing 40 shown in Fig. 2, and in a second position outside of the housing 40, shown in Fig. 3. Thus, the tray 70 is configured to be retractably moved through the opening 42 between the first and second positions. In other words, the battery disconnection unit 60 is arranged to move together with the tray 70 from the first position inside the housing 40, to the second position outside of the housing 40. Hereby, the battery disconnection unit 60 may be moved from inside the housing 40 to outside of the housing 40 for improved access.

The tray 70 shown in Figs. 2 and 3 is attached to the housing 40, or a structure within the housing 40, both in the first position and the second position of the tray 70. For example, and as shown in best in Fig. 3, the battery pack arrangement 31 comprises a rack 44 arranged in the housing 40 adjacent the opening 42. The rack 44 is typically arranged on inner lateral walls of the housing 40, extending from the opening 42 and into the housing 40. The rack 44 comprises first engagement surfaces 44a, 44b, typically a first one 44a of the first engagement surfaces 44a, 44b arranged in a first inner lateral wall of the housing 40, and a second one 44b of the first engagement surfaces 44a, 44b arranged in an opposite second inner lateral wall of the housing 40. Moreover, the tray 70 may comprise corresponding second engagement surfaces 70a, 70b, here exemplified as a first one 70a of the second engagement surfaces 70a, 70b arranged in a lateral side portion, such as a first outer lateral wall, of the tray 70, and a second one 70b of the second engagement surfaces 70a, 70b arranged in an opposite lateral side portion, such as a second outer lateral wall of the tray 70. The first engagement surfaces 44a, 44b and the second engagement surfaces 70a, 70b are configured to engage with each other as the tray 70 is moved through the opening 42 of the housing 40, e.g. moved from the first to the second position. In the example of Figs. 2 and 3, the second engagement surfaces 70a, 70b are flat surfaces of the first and second outer lateral walls of the tray 70. Thus, the first and second engagement surfaces 40a, 40b, 70a, 70b are arranged to slide relative each other as the tray 70 is retractably moved from inside the housing 40 to outside housing 40 via the opening 42. It should be mentioned that the tray 70 may be detachably arranged to the rack 44, and may thus be moved externally from the housing 40 together with the battery disconnection unit 60.

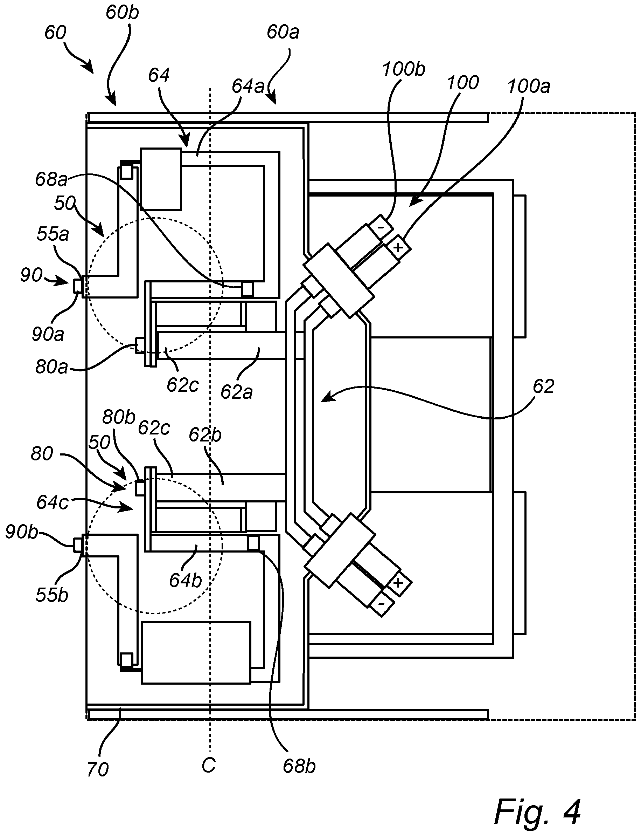

With additional reference to **FIG. 4** showing the tray 70 and the battery disconnection unit 60 in greater detail, the battery pack arrangement 31 will be further described together with reference to Figs. 2 and 3. As shown in Fig. 4, the battery disconnection unit 60 is supported on the tray 70, and may be attached to the tray 70 by fasteners (e.g. screws or bolts), by adhesive, by soldering or any other suitable means. The battery disconnection unit 60 comprises a battery pack busbar arrangement 64 electrically connected to the battery pack terminal 54.

The battery pack busbar arrangement 64 comprises a positive battery pack busbar 64a releasably connected electrically and mechanically to a positive terminal 54a of the battery pack terminal 54, and a negative battery pack busbar 64b releasably connected electrically and mechanically to a negative terminal 54b of the battery pack terminal 54. The battery pack arrangement 31 further comprises a high voltage busbar arrangement 62 electrically connected to the high voltage connection 100. In the example of Fig. 4, the high voltage busbar arrangement 62 comprises a positive high voltage busbar 62a connected electrically and mechanically to a positive terminal 100a of the high voltage connection 100, and a negative high voltage busbar 62b connected electrically and mechanically to a negative terminal 100b of the high voltage connection 100. Thus, the positive and negative battery pack and high voltage busbars 62a, 62b, 64a, 64b are arranged to transfer high voltage from the battery pack 50 to the high voltage connection 100 via the battery disconnection unit 60, typically voltages over 100 V, or voltages over 200 V, such as e.g. between 200 V and 1000 V, or between 600 V and 1000 V.

The battery pack arrangement 31 may further comprise a first fastener structure 80 configured to releasably connect the high voltage busbar arrangement 62 electrically and mechanically to the battery pack busbar arrangement 64. In more detail, a first one 80a of the first fastener structure 80 releasably connects the positive battery pack busbar 64a to the positive high voltage busbar 62a, and a second one 80b of the first fastener structure 80 releasably connects the negative battery pack busbar 64b to the negative high voltage busbar 62b. Each one of the first fastener structures 80a, 80b may e.g. be a screw or a bolt, and may be arranged in a first state which enables the respective positive and negative high voltage busbar 62a, 62b to be electrically and mechanically connected to the corresponding positive and negative battery pack busbar 64a, 64b, and arranged in a second state which enables the respective positive and negative high voltage busbar 62a, 62b to be electrically and mechanically disconnected to the corresponding positive and negative battery pack busbar 64a, 64b.

For example, as shown best in Fig. 3, each one of the high voltage busbar arrangement 62 and the battery pack busbar arrangement 64 comprises corresponding first interacting structures 63, 65 configured to releasably engage with the first fastener structure 80. In more detail, each one of the positive and negative high voltage busbars 62a, 62b comprises a corresponding first interacting structure 63a, 63b, and each one of the positive and negative battery pack busbars 64a, 64b comprises a corresponding first interacting structure 65a, 65b. Thus, the first one 80a of the first fastener structure 80 releasably connects the positive battery pack busbar 64a to the positive high voltage busbar 62a by a first pair of first interacting structures 63a, 65a of the positive high voltage and battery pack busbars 62a, 64a, and the second one 80b of the first fastener structure 80 releasably connects the negative battery pack busbar 64b to the negative high voltage busbar 62b by a second pair of first interacting structures 63b, 65b of the negative high voltage and battery pack busbars 62b, 64b. The first interacting structures 63a, 63b, 65a, 65b may e.g. be threaded through holes and the first fastener structures 80a, 80b threaded screws. Thus, by aligning the threaded through holes of the first pair of first interacting structures 63a, 65a, the threaded screw of the first one 80a of the first fastener structure 80 may threadingly interact with the threaded through holes in the first state of the first fastener structure 80. By releasing the threaded screw of the first one 80a of the first fastener structure 80 from the threaded through holes, the first fastener structure 80 is brought into its second state, and the positive high voltage busbar 62a is physically disconnected from the positive battery pack busbar 64a. Moreover, by aligning the threaded through holes of the second pair of first interacting structures 63b, 65b, the threaded screw of the second one 80b of the first fastener structure 80 may threadingly interact with the threaded through holes in the first state of the first fastener structure 80. By releasing the threaded screw of the second one 80b of the first fastener structure 80 from the threaded through holes, the first fastener structure 80 is brought into its second state, and the negative high voltage busbar 62b is physically disconnected from the negative battery pack busbar 64b.

The battery pack arrangement 31 may further comprise a second fastener structure 90 configured to releasably connect the battery pack busbar arrangement 64 electrically and mechanically to the battery pack terminal 54. In more detail, a first one 90a of the second fastener structure 90 releasably connects the positive battery pack busbar 64a to the positive terminal 54a of the battery pack terminal 54, and a second one 90b of the second fastener structure 90 releasably connects the negative battery pack busbar 64b to the negative terminal 54b of the battery pack terminal 54. Each one of the second fastener structures 90a, 90b may e.g. be a screw or a bolt, and may be arranged in a first state which enables the respective positive and negative battery pack busbar 64a, 64b to be electrically and mechanically connected to the corresponding positive and negative terminal 54a, 54b of the battery pack terminal 54, and arranged in a second state which enables the respective positive and negative battery pack busbar 64a, 64b to be electrically and mechanically disconnected to the corresponding positive and negative terminal 54a, 54b of the battery pack terminal 54.

For example, each one of the battery pack busbar arrangement 64 and the battery pack terminal 54 comprises corresponding second interacting structures 67, 55 configured to releasably engage with the second fastener structure 90. In more detail, each one of the positive and negative battery pack busbars 64a, 64b comprises a corresponding second interacting structure 67a, 67b, and each one of the positive and negative terminal 54a, 54b of the battery pack terminal 54 comprises a corresponding second interacting structure 55a, 55b. Thus, the first one 90a of the second fastener structure 90 releasably connects the positive battery pack busbar 64a to the positive terminal 54a of the battery pack terminal 54 by a first pair of second interacting structures 67a, 55a of the positive battery pack busbar 64a and the positive terminal 54a, and the second one 90b of the second fastener structure 90 releasably connects the negative battery pack busbar 64b to the negative terminal 54b of the battery pack terminal 54 by a second pair of second interacting structures 67b, 55b of the negative battery pack busbar 64b and the negative terminal 54b. The second interacting structures 67a, 67b, 55a, 55b may e.g. be threaded through holes and the second fastener structures 90a, 90b threaded screws. Thus, by aligning the threaded through holes of the first pair of second interacting structures 67a, 55a, the threaded screw of the first one 90a of the second fastener structure 90 may threadingly interact with the threaded through holes in the first state of the second fastener structure 90. By releasing the threaded screw of the first one 90a of the second fastener structure 90 from the threaded through holes, the second fastener structure 90 is brought into its second state, and the positive battery pack busbar 65a is physically disconnected from the positive terminal 54a of the battery pack terminal 54. Moreover, by aligning the threaded through holes of the second pair of second interacting structures 67b, 55b, the threaded screw of the second one 90b of the second fastener structure 90 may threadingly interact with the threaded through holes in the first state of the second fastener structure 90. By releasing the threaded screw of the second one 90b of the second fastener structure 90 from the threaded through holes, the second fastener structure 90 is brought into its second state, and the negative battery pack busbar 65b is physically disconnected from the negative terminal 54b of the battery pack terminal 54.

Thus, the battery disconnection unit 60 may be released from battery pack 50 and the high voltage connection 100 by re-configuring the first and second fastener structures 80, 90 from the first state to the second state, e.g. by unscrewing the threaded screws of the first and second fastener structures 80a, 80b, 90a, 90b from the threaded through-holes of the first and second interacting structures 63a, 63b, 65a, 65b, 67a, 67b, 55a, 55b. Hereby, the battery disconnection unit 60 may be freely moved relative to the housing 40, and may be retractably moved together with the tray 70 relative to the housing 40 by being passed through the opening 42.

As shown in Figs. 2-4, the battery disconnection unit 60 may comprises an inner portion 60a facing the high voltage connection 100, and an outer portion 60b arranged opposite to the inner portion 60a with regards to a centre axis C of the battery disconnection unit 60. In other words, the outer portion 60b is arranged closer to the opening 42 as compared to the inner portion 60a, when the tray 70 is arranged in the first position (i.e. inside the housing 40). Stated differently, the inner portion 60a is arranged closer to the high voltage connection 100 as compared to the outer portion 60b.

Typically, the first interaction structures 65a, 65b for the battery pack busbar arrangement 64 is arranged in the outer portion 60b of the battery disconnection unit 60. Hereby, the first fastener structure 80 may be accessed in the outer portion 60b of the battery disconnection unit 60, e.g. through the opening 42 in the housing 40. Thus, the battery pack busbar arrangement 64 may be released from the high voltage busbar arrangement 62 by releasing the first fastener structure 80 as previously described.

Correspondingly, the first interaction structures 63a, 63b for the high voltage busbar arrangement 62 is arranged to the extend from the high voltage connection 100 up to the outer portion 60b of the battery disconnection unit 60. Hereby, the first interaction structures 63a, 63b, 65a, 65b of the high voltage busbar arrangement 62 and the battery pack busbar arrangement 64 can align for releasably attachment by means of the first fastener structure 80. Preferably, the high voltage busbar arrangement 62 is elongated. That is, in the example of Figs. 2 and 4, each one of the positive and negative high voltage busbars 62a, 62b is elongated and extends from the high voltage connection 100 towards the opening 42 of the housing 40. Typically, the first interaction structure 63a, 63b of the high voltage busbar arrangement 62 is arranged in an end portion 62c of the elongated high voltage busbar arrangement 62 (as shown in Figs. 3 and 4, in a corresponding end portion of the positive and negative high voltage busbars 62a, 62b). Correspondingly, and additionally or alternatively to the elongated high voltage busbar arrangement 62, the battery pack busbar arrangement 64 is elongated. That is, in the example of Figs. 2-4, each one of the positive and negative battery pack busbars 64a, 64b is elongated. Typically, the first interaction structures 65a, 65b of the battery pack busbar arrangement 64 is arranged in an end portion 64c of the elongated battery pack busbar arrangement 64 (as shown in Figs. 3 and 4, in a corresponding end portion of the positive and negative battery pack busbars 64a, 64b).

The battery disconnection unit 60 may e.g. comprise at least one contactor to electrically connect and disconnect the battery pack 50 to and from the high voltage connection 100. For example, the battery disconnection unit 60 may comprise a first contactor 68a arranged in the positive battery pack busbar 64a for electrically connecting and disconnecting the positive terminal 54a of the battery pack terminal 54 and the positive terminal 100a of the high voltage connection 100, and/or comprise a second contactor 68b arranged in the negative battery pack busbar 64b for electrically connecting and disconnecting the negative terminal 54b of the battery pack terminal 54 and the negative terminal 100b of the high voltage connection 100. The battery disconnection unit 60 may comprises further components, such as e.g. a PCB 69 (shown schematically in Fig. 3) including battery management functionality and/or one or more fuses.

Example 1. A battery pack arrangement comprising: a housing having an opening; a battery pack including a plurality of battery cells electrically connected to battery pack terminal of the battery pack, the battery pack being arranged in the housing; a battery disconnection unit configured to disconnect the battery pack from a high voltage connection for a load and/or a power source; a tray supporting the battery disconnection unit, wherein the tray is retractably arranged in the housing such that the tray supporting the battery disconnection unit can be moved through the opening of the housing for accessing the battery disconnection unit.

Example 2. The battery pack arrangement of example 1, wherein the battery disconnection unit comprises a battery pack busbar arrangement electrically connected to the battery pack terminal , and wherein the battery pack arrangement further comprises a high voltage busbar arrangement electrically connected to the high voltage connection, and a first fastener structure configured to releasably connect the high voltage busbar arrangement electrically and mechanically to the battery pack busbar arrangement.

Example 3. The battery pack arrangement of example 2, wherein each one of the high voltage busbar arrangement and the battery pack busbar arrangement comprises a first interacting structure configured to releasably engage with the first fastener structure.

Example 4. The battery pack arrangement of example 3, wherein the first fastener structure and the first interacting structures are configured to threadingly interact with each other.

Example 5. The battery pack arrangement of any of examples 3-4, wherein the battery disconnection unit comprises an inner portion facing the high voltage connection of the load and/or power source, and an outer portion arranged opposite to the inner portion with regards to a centre axis of the battery disconnection unit, and wherein the first interaction structures for the battery pack busbar arrangement is arranged in the outer portion of the battery disconnection unit.

Example 6. The battery pack arrangement of any of examples 3-5, wherein the high voltage busbar arrangement is elongated, and wherein the first interaction structure of the high voltage busbar arrangement is arranged in an end portion of the elongated high voltage busbar arrangement.

Example 7. The battery pack arrangement of any of examples 3-6, wherein the battery pack busbar arrangement is elongated, and wherein the first interaction structure of the battery pack busbar arrangement is arranged in an end portion of the elongated battery pack busbar arrangement.

Example 8. The battery pack arrangement of any of examples 2-7, further comprising a second fastener structure configured to releasably connect the battery pack busbar arrangement electrically and mechanically to the battery pack terminal.

Example 9. The battery pack arrangement of example 8, wherein each one of the battery pack terminal and the battery pack busbar arrangement comprises a second interacting structure configured to releasably engage with the second fastener structure.

Example 10. The battery pack arrangement of example 9, wherein the second fastener structure and the second interacting structures are configured to threadingly interact with each other.

Example 11. The battery pack arrangement of any of examples 8-10, wherein the battery pack busbar arrangement comprises a positive battery pack busbar releasably connected electrically and mechanically to a positive terminal of the battery pack terminal, and a negative battery pack busbar releasably connected electrically and mechanically to a negative terminal of the battery pack terminal.

Example 12. The battery pack arrangement of any of examples 2-11, wherein the high voltage busbar arrangement comprises a positive high voltage busbar connected electrically and mechanically to a positive terminal of the high voltage connection, and a negative high voltage busbar connected electrically and mechanically to a negative terminal of the high voltage connection.

Example 13. The battery pack arrangement of any of examples 2-12, further comprises at least one contactor configured to electrically connect and disconnect the battery pack to the high voltage connection, wherein the contactor is arranged in the battery pack busbar arrangement.

Example 14. The battery pack arrangement of any of examples 1-12, wherein the tray is arranged above the battery pack.

Example 15. The battery pack arrangement of any of examples 1-14, further comprising a rack arranged in the housing adjacent the opening, the rack comprising a first engagement surface, wherein the tray comprises a second engagement surface configured to move along the first engagement surface when the tray is moved through the opening of the housing.

Example 16. The battery pack arrangement of any of examples 1-15, wherein the battery disconnection unit comprises a PCB including battery management functionality.

Example 17. A vehicle comprising the battery pack arrangement of any of examples 1-16.

Example 18. The vehicle of example 17, further comprising an electric machine for propelling the vehicle, the electric machine being powered by the battery pack arrangement.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery pack arrangement (31) comprising:
- a housing (40) having an opening (42),
- a battery pack (50) including a plurality of battery cells (52) electrically connected to battery pack terminal (54) of the battery pack (50), the battery pack (50) being arranged in the housing (40),
- a battery disconnection unit (60) configured to disconnect the battery pack (50) from a high voltage connection (100) for a load and/or a power source (10),
- a tray (70) supporting the battery disconnection unit (60), wherein the tray (70) is retractably arranged in the housing (40) such that the tray (70) supporting the battery disconnection unit (60) can be moved through the opening (42) of the housing (40) for accessing the battery disconnection unit (60).

2. The battery pack arrangement (31) of claim 1, wherein the battery disconnection unit (60) comprises a battery pack busbar arrangement (64) electrically connected to the battery pack terminal (54) , and wherein the battery pack arrangement (31) further comprises a high voltage busbar arrangement (62) electrically connected to the high voltage connection (100), and a first fastener structure (80) configured to releasably connect the high voltage busbar arrangement (62) electrically and mechanically to the battery pack busbar arrangement (64).

3. The battery pack arrangement (31) of claim 2, wherein each one of the high voltage busbar arrangement (62) and the battery pack busbar arrangement (64) comprises a first interacting structure (63, 65) configured to releasably engage with the first fastener structure (80).

4. The battery pack arrangement (31) of claim 3, wherein the first fastener structure (80) and the first interacting structures (63, 65) are configured to threadingly interact with each other.

5. The battery pack arrangement (31) of any of claims 3-4, wherein the battery disconnection unit (60) comprises an inner portion (60a) facing the high voltage connection (100) of the load and/or power source (10), and an outer portion (60b) arranged opposite to the inner portion (60a) with regards to a centre axis (C) of the battery disconnection unit (60), and wherein the first interaction structures (65) for the battery pack busbar arrangement (64) is arranged in the outer portion (60b) of the battery disconnection unit (60).

6. The battery pack arrangement (31) of any of claims 3-5, wherein the high voltage busbar arrangement (62) is elongated, and wherein the first interaction structure (63) of the high voltage busbar arrangement (62) is arranged in an end portion (62c) of the elongated high voltage busbar arrangement (62).

7. The battery pack arrangement (31) of any of claims 3-6, wherein the battery pack busbar arrangement (64) is elongated, and wherein the first interaction structure (65) of the battery pack busbar arrangement (64) is arranged in an end portion (64c) of the elongated battery pack busbar arrangement (64).

8. The battery pack arrangement (31) of any of claims 2-7, further comprising a second fastener structure (90) configured to releasably connect the battery pack busbar arrangement (64) electrically and mechanically to the battery pack terminal (54) .

9. The battery pack arrangement (31) of claim 8, wherein each one of the battery pack terminal (54) and the battery pack busbar arrangement (64) comprises a second interacting structure (67) configured to releasably engage with the second fastener structure (90).

10. The battery pack arrangement of claim 9, wherein the second fastener structure (90) and the second interacting structures (67) are configured to threadingly interact with each other.

11. The battery pack arrangement (31) of any of claims 8-10, wherein the battery pack busbar arrangement (64) comprises a positive battery pack busbar (64a) releasably connected electrically and mechanically to a positive terminal (54a) of the battery pack terminal (54), and a negative battery pack busbar (64b) releasably connected electrically and mechanically to a negative terminal (54b) of the battery pack terminal (54).

12. The battery pack arrangement (31) of any of claims 2-11, wherein the high voltage busbar arrangement (62) comprises a positive high voltage busbar (62a) connected electrically and mechanically to a positive terminal (100a) of the high voltage connection (100), and a negative high voltage busbar (62b) connected electrically and mechanically to a negative terminal (100b) of the high voltage connection (100).

13. The battery pack arrangement (31) of any of claims 2-12, further comprises at least one contactor (68a, 68b) configured to electrically connect and disconnect the battery pack (50) to the high voltage connection (100), wherein the contactor (68a, 68b) is arranged in the battery pack busbar arrangement (64).

14. The battery pack arrangement (31) of any of claims 1-13, further comprising a rack (44) arranged in the housing (40) adjacent the opening (42), the rack (44) comprising a first engagement surface (44a, 44b), wherein the tray (70) comprises a second engagement surface (70a, 70b) configured to move along the first engagement surface (44a, 44b) when the tray (70) is moved through the opening (42) of the housing (40).

15. A vehicle (1) comprising the battery pack arrangement (31, 32, 33) of any of claims 1-14.
